# EUROPEAN PATENT APPLICATION

(11) **EP 3 754 311 A1**
(43) Date of publication of application: **23.12.2020**
(21) Application number: 19181337.7
(22) Date of filing: 19.06.2019
(51) Int. Cl.: G01H 1/00, G08B 13/04, G08B 13/16

(54) **SENSOR DEVICE COMPRISING A VIBRATION DETECTOR**

(71) Applicant: Assa Abloy AB, 107 23 Stockholm (SE)
(72) Inventor: CEDERBLAD, Mats, 165 71 Hässelby (SE); JONSSON, Tomas, 144 62 Rönninge (SE); MACKEGÅRD, Per, 171 78 Solna (SE); JOHANSSON, Stefan, 112 36 Stockholm (SE)
(74) Representative: Kransell & Wennborg KB

(57) **Abstract**

It is provided a sensor device comprising: a vibration detector configured to be provided in contact with a windowpane of a window; a sensor controller; and a cable between the vibration detector and the sensor controller.

## Description

### TECHNICAL FIELD

The present disclosure relates to the field of sensor devices and in particular to a sensor device comprising a vibration detector.

### BACKGROUND

Unfortunately, it is a continuous problem with break-ins and burglaries in homes and commercial properties. There are a number of sensors in the prior art to detect such break-ins. Some sensors detect when a window or door is opened or glass is broken and other sensors detect movement.

However, the detection of a broken window is not trivial. Normal accelerometers, e.g. in window frames, do not provide data which is distinct enough from other events, such as an innocent ball bouncing on the window.

### SUMMARY

One objective is to provide a reliable way to detect when a windowpane is shattered.

According to a first aspect, it is provided a sensor device comprising: a vibration detector configured to be provided in contact with a windowpane of a window; a sensor controller; and a cable between the vibration detector and the sensor controller.

The vibration detector may comprise a piezoelectric sensor.

The piezoelectric sensor may be configured to wake up the sensor controller when a vibration is detected by the piezoelectric sensor.

The vibration detector may comprise an accelerometer.

The sensor controller may be configured to send an alarm signal, when detecting, based on signals from the vibration detector, that the windowpane shatters.

The sensor controller may be configured to detect that the windowpane is broken based on filtering out vibrations of a frequency lower than a threshold frequency.

The threshold frequency may be at least 20 kHz.

The sensor controller may be configured to send an alarm signal when detecting that the connection with the vibration detector is broken.

The sensor device may further comprise a proximity detector connected to the sensor controller, in which case the sensor controller is configured to determine whether the window is open or closed based on the proximity detector.

According to a second aspect, it is provided a window comprising: a windowpane; and the sensor device according to the first aspect. In this case, the vibration detector of the sensor device is provided in contact with the windowpane.

The window may further comprise a window frame, wherein the sensor controller of the sensor device is attached to the window frame.

The window may further comprise a sash frame, wherein the sensor controller of the sensor device is attached to the sash frame.

The vibration detector of the sensor device may be attached to the windowpane.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic front view illustrating a window according to one embodiment; and
Fig 2 is a schematic diagram illustrating components of the sensor controller of Fig 1.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

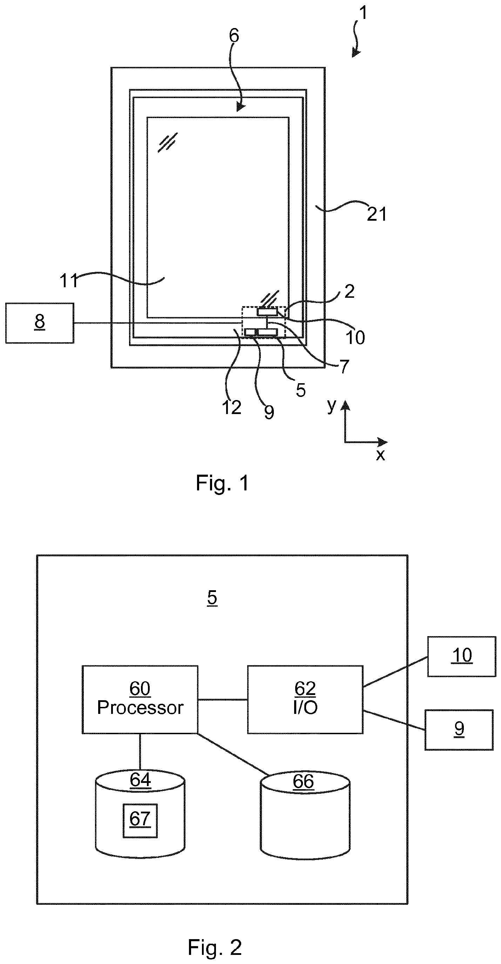

Fig 1 is a schematic front view illustrating a window 1 according to one embodiment. The window 1 comprises a window frame 21 and a window sash 6.

The window sash 6 can be, but is not necessarily, moveable (e.g. rotatable and/or linearly displaceable) in relation to the window frame 21 to allow the window to open. Optionally, the window sash 6 is rotatable in two ways, e.g. both along one side and along the bottom.

The window sash 6 comprises one or more windowpanes 11 and a sash frame 12 for fixating the windowpane(s) 11 in the window sash 6. The windowpanes 11 can be made of glass.

A sensor device 2 comprises a sensor controller 5 and a vibration detector 10 and a cable 7 provided between the sensor controller 5 and the vibration detector 10.

The vibration detector 10 is provided in contact with the windowpane 11. For instance, the vibration detector 10 can be attached to the windowpane 11, e.g. using an adhesive. The vibrations detected by the vibration detector 10 can be used by the sensor controller 5 to detect when a windowpane is shattered. Since the vibration detector 10 is in contact with the windowpane, vibrations of sufficiently high frequencies are detectable, e.g. to distinguish between a ball bounce on the windowpane and a shattered windowpane. The shattered windowpane has much greater amplitude of higher frequencies (e.g. above 20-30 kHz) than the ball bounce.

The sensor controller 5 is attached to the window 1. For instance, the sensor controller 5 can be attached to the window frame 21 or the sash frame 12. If installed during production of the window, the sensor controller can be provided internally within the window frame 21 or sash frame 12. Alternatively, the sensor controller 5 can be provided attached to a surface of the window frame 21 or the sash frame 12.

The cable 7 between the sensor controller 5 and the vibration detector 10 can e.g. be a pair of copper wires. Optionally, at least part of the connection between the sensor controller 5 and the vibration detector 10 passes via one or more hinges, to reduce visible cabling.

The vibration detector 10 can be an accelerometer and/or a piezoelectric sensor. Many piezoelectric sensors needs no electric power supply and is thus power efficient. An accelerometer can be used to detect vibrations in a better way. To use the advantages of both sensor types, a combination of sensors can be used, where the piezoelectric sensor is used to wake up the accelerometer. In this way, the accelerometer does not need to perform any periodic polling to obtain vibration measurements, reducing idle power needs significantly. Moreover, this combination results in an extremely quick wake-up, since the piezoelectric sensor senses the vibration with negligible delay.

Optionally, the piezoelectric sensor is configured to wake up the sensor controller 5 when a vibration is detected. In this way, the sensor controller 5 can be in a low power state, thus conserving energy and prolonging use of the sensor controller 5 without its battery running out of power.

The sensor controller 5 determines when the vibrations detected by the vibration detector 10 correspond to that the windowpane is shattered. This determination of the shattered windowpane can be based on filtering out vibrations of a frequency lower than a threshold frequency, i.e. high-pass filtering. The threshold frequency can be 20 kHz or higher, e.g. 30 kHz. The high-pass filtering can be performed in the vibration detector 10 and/or the high pass filtering can occur in the sensor controller 5 or any other suitable device. Many piezoelectric sensors have a peak sensitivity at a certain frequency. For instance, there are piezoelectric sensors having a peak sensitivity at 32 kHz, leading to an inherent high-pass filtering. This high-pass filtering makes it more reliable to distinguish between shattering glass and e.g. a ball bounce on the windowpane. A ball bounce on the windowpane also results in vibrations, but with lower main frequency components than shattering glass.

When a shattering windowpane is determined, the sensor controller 5 can send an alarm signal. The alarm signal can be a wireless signal to a home security system 8 which can take further action, e.g. to alert a user and/or security personnel. Alternatively or additionally, the sensor controller 5 can itself, or using locally connected output devices, emit audible and/or visible alerts when a windowpane shattering is detected.

Optionally, the sensor controller 5 is configured to send an alarm signal when detecting that the connection with the vibration detector 10 is broken. Such a broken connection would e.g. occur if the window pane is removed, which is one way that a burglar could attempt to break in. Sometimes a burglar can attempt to break in by removing a cassette comprising several window panes, which also would be detected when the connection is broken.

Optionally, a proximity detector 9 is provided. The proximity sensor 9 can be based on any one or more of electrical capacity, electrical inductivity, infrared light, magnetism (e.g. a hall sensor), photocell, sonar, mechanical switch etc. The proximity detector is connected to the sensor controller 5. In this way, the sensor controller 5 can determine whether the window is open or closed based on the proximity detector 9. The proximity detector is provided attached to one of the sash frame 12 or the window frame 21, such that it can detect proximate presence of the other of the sash frame 12 or the window frame 21. In this way, the sensor controller 5 can determine the status of the window, e.g. closed, open, etc. In one embodiment, the proximity detector 9 and sensor controller 5 form part of a single device.

By providing the vibration detector 10 in contact with the windowpane, significantly higher frequencies can be detected compared to if the vibration detector were to be placed on e.g. the sash frame or window frame. This greatly improves the ability to correctly detect when the windowpane is shattered.

Fig 2 is a schematic diagram illustrating components of the sensor controller 5 of Fig 1. The sensor controller 5 comprises a processor 60, provided using any combination of one or more of a suitable central processing unit (CPU), multiprocessor, microcontroller, digital signal processor (DSP), capable of executing software instructions 67 stored in a memory 64. The processor 60 could alternatively be implemented using an application specific integrated circuit (ASIC), field programmable gate array (FPGA), etc.

The memory 64 can be any combination of random-access memory (RAM) and/or read-only memory (ROM). The memory 64 also comprises persistent storage, which, for example, can be any single one or combination of solid-state memory, magnetic memory, and optical memory.

A data memory 66 is also provided for reading and/or storing data during execution of software instructions in the processor 60. The data memory 66 can be any combination of RAM and/or ROM.

The sensor controller 5 further comprises a communication module 62 for communication with external entities. The communication module 62 can support any suitable proprietary or standardised wireless protocol, e.g. Bluetooth or Bluetooth Low Energy (BLE), ZigBee, any of the IEEE 802.11x standards (also known as WiFi), etc, and/or any suitable proprietary or standardised wire-based protocol, e.g. based on a serial interface (e.g. RS485, RS232), Universal Serial Bus (USB), Ethernet.

The sensor controller 5 is connected to the vibration detector 10 and optionally the proximity detector 9.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A sensor device (2) comprising:
a vibration detector (10) configured to be provided in contact with a windowpane (11) of a window (1);
a sensor controller (5); and
a cable (7) between the vibration detector (10) and the sensor controller (5).

2. The sensor device (2) according to claim 1, wherein the vibration detector (10) comprises a piezoelectric sensor.

3. The sensor device (2) according to claim 2, wherein the piezoelectric sensor is configured to wake up the sensor controller (5) when a vibration is detected by the piezoelectric sensor.

4. The sensor device (2) according to any one of the preceding claims, wherein the vibration detector (10) comprises an accelerometer.

5. The sensor device (2) according to any one of the preceding claims, wherein the sensor controller (5) is configured to send an alarm signal, when detecting, based on signals from the vibration detector (10), that the windowpane shatters.

6. The sensor device (2) according to claim 5, wherein the sensor controller is configured to detect that the windowpane is broken based on filtering out vibrations of a frequency lower than a threshold frequency.

7. The sensor device (2) according to claim 6, wherein the threshold frequency is at least 20 kHz.

8. The sensor device (2) according to any one of the preceding claims, wherein the sensor controller (5) is configured to send an alarm signal when detecting that the connection with the vibration detector (10) is broken.

9. The sensor device (2) according to any one of the preceding claims, further comprising a proximity detector (9) connected to the sensor controller (5), and wherein the sensor controller (5) is configured to determine whether the window is open or closed based on the proximity detector (9).

10. A window (1) comprising:
a windowpane (11); and
the sensor device (2) according to any one of the preceding claims, wherein the vibration detector (10) of the sensor device (2) is provided in contact with the windowpane (11).

11. The window (1) according to claim 10, further comprising a window frame (21), wherein the sensor controller (5) of the sensor device (2) is attached to the window frame (21).

12. The window (1) according to claim 10, further comprising a sash frame (12), wherein the sensor controller (5) of the sensor device (2) is attached to the sash frame (12).

13. The window (1) according to any one of claims 10 to 12, wherein the vibration detector (10) of the sensor device (2) is attached to the windowpane (11).
